# EUROPEAN PATENT SPECIFICATION

(11) **EP 1 484 538 B1**
(45) Date of publication and mention of the grant of the patent: **06.12.2006**
(21) Application number: 04013129.4
(22) Date of filing: 03.06.2004
(51) Int. Cl.: F16K 31/06, B60T 15/02

(54) **Normally open solenoid valve**
Normal geöffnetes Elektromagnetventil
Soupape électromagnétique normalement ouverte

(30) Priority: 03.06.2003 JP 2003157909
(43) Date of publication of application: 08.12.2004
(73) Proprietor: NISSIN KOGYO CO., LTD., Ueda-shi, Nagano-ken (JP)
(72) Inventor: Takamatsu, Yoshiyuki, Tomi-shi Nagano 389-0514 (JP); Shigeta, Masaya, Tomi-shi Nagano 389-0514 (JP); Ohi, Takeshi, Tomi-shi Nagano 389-0514 (JP)
(74) Representative: HOFFMANN EITLE

(56) References cited:
- US-A- 5 556 175
- PATENT ABSTRACTS OF JAPAN vol. 2003, no. 04, 2 April 2003 (2003-04-02) & JP 2002 347597 A (BOSCH AUTOMOTIVE SYSTEMS CORP), 4 December 2002 (2002-12-04)

## Description

### BACKGROUND OF THE INVENTION

### Field of the Invention

The present invention relates to a normally open solenoid valve having a valve element that opens and closes a hydraulic fluid channel.

### Background Art

Conventionally, as a solenoid valve that opens and closes a hydraulic fluid channel, a normally open valve that opens in normal conditions and closes in response to excitation of a fixed core due to energization of a coil is available. Such a normally open valve has a valve seat that opens and forms a hydraulic fluid channel and a valve element that can come into contact with and separate from the valve seat. The valve element can shield the hydraulic fluid channel by contact with the valve seat, and makes communication to the hydraulic fluid channel by separating from the valve seat. Generally, the valve element of the normally open solenoid valve is swaged and fixed to the front endof a retainer that has a spherical, thin and long columnar shape.

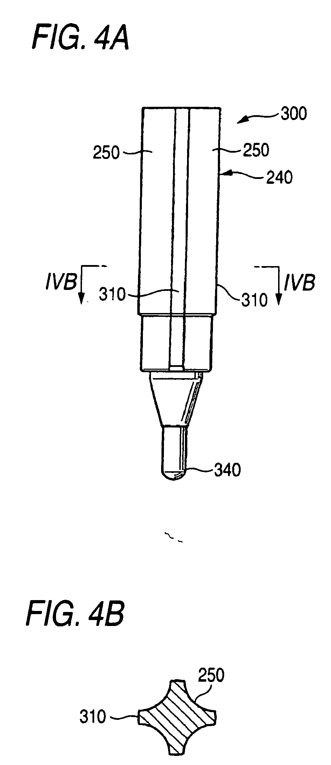

Recently, a normally open solenoid valve formed by integrally forming a valve element and a retainer is available (for example, refer to JP-A-2002-347597). The integrally formed valve element 300 includes a valve part 340 and a shaft part 240 as roughly shown in Figs. 4A and 4B, and furthermore, the shaft part 240 has four sliding convex portions 310 and circulation grooves 250 formed between the sliding portions. The valve element 300 is made of a PEEK (polyether-ether keton) resin, and is injection molded. The sliding convex portions 310 of the valve element 300 are slid and guided on the inner surface of a through hole made in a fixed core (fixed iron core) of the normally open solenoid valve. However, the valve element of the normally open solenoid valve repeats contact with and separation from the valve seat, so that, in particular, the valve part that comes into contact with the valve seat needs a sufficient hardness.

Therefore, the inventors of the present invention set about developing a normally open solenoid valve that had a valve element using a magnetic material with a high hardness and formed integrally with a retainer. Although the valve element formed of a magnetic material was hard, when it was excited, the valve element was attracted by the inner surface of the through hole of the fixed core and so-called wobble of the valve element was caused, and the sliding friction between the attracted valve element and the through hole increased. Such wobble of the valve element is also caused to some extent in a generally-known retainer that is not formed of a magnetic material due to a clearance of a through hole, and this influences the seating performance (sealing performance) of the valve element onto the valve seat and working performance of the valve element although the influence is not so great as in the valve element made of a magnetic material. In order to prevent the wobble of the valve element, the clearance between the valve element and the inner surface of the through hole was reduced by way of trial, and although this prevented wobble, the sliding friction of the valve element increased, and in particular, when the fluid pressure of the hydraulic fluid increased, the hydraulic fluid hardly flowed, and this further obstructed sliding of the valve element.

A normally open solenoid valve according to the preamble of claim 1 is disclosed in US 5,556,175.

### SUMMARY OF THE INVENTION

An object of the invention is to provide a normally open solenoid valve including a valve element that is integrally formed with a retainer and has a sufficient hardness for being in contact with a valve seat.

The invention provides a normally open solenoid valve, including: a coil; a fixed core that is excited when the coil is energized, the fixed core having a through hole and an opening formed at an end of the through hole; a valve seat disposed at the opening; a valve element inserted through the through hole, the valve element including a valve part for coming into contact with the valve seat and a roughly columnar shaft part extending from the valve part; and a movable core that pushes and moves the valve element; wherein the shaft part has two sliding portions, respectively formed near the end portions in the lengthwise direction of the valve element, that are slidable on the inner surface of the through hole and are formed to be spaced in an axial direction of the shaft part and a narrowed portion having an outer diameter smaller than the sliding portions between the plurality of sliding portions; characterized in that the sliding portions have circulation grooves, and the valve element and the movable core are separate parts such that the movable core is attracted to the fixed core and presses an end portion of the valve element.

According to the invention, even while the clearance between the shaft part of the valve element and the inner surface of the through hole of the normally open solenoid valve is reduced to prevent wobble of the shaft part, the sliding friction of the valve element can be reduced since the sliding area is reduced by the narrowed portions of the shaft part. Furthermore, since the narrowed portions of the shaft part allow the hydraulic fluid to flow, even when the clearance between the shaft part and the inner surface of the through hole is reduced and this causes a high fluid pressure of the hydraulic fluid, the valve element can smoothly move.

Preferably, the valve element includes a magnetic material.

According to the invention, while the valve element is integrally formed, a sufficiently high hardness for being in contact with the valve seat can be obtained. Furthermore, the influence of the magnetic force that causes attraction toward the fixed core side is reduced by the narrowed portions of the shaft part, whereby the sliding friction between the through hole and the shaft part can be reduced even when the valve element is formed of a magnetic material.

Preferably, the two sliding portions are formed near a portion where the shaft part is connected to the valve part and near an end portion of the shaft part that comes into contact with the movable core; and the two sliding portions are formed within a range slidable on the inner surface of the through hole.

According to the invention, since the valve part can be guided on the inner surface of the through hole by the two sliding portions in the vicinity of both ends of the shaft part slidable on the inner surface of the through hole, the inclination of the valve element to the through hole can be minimized, and the lowering in sealing performance can be prevented. Furthermore, even when the clearance between the sliding portions and the through hole is reduced to increase the accuracy of the position of the valve element, the sliding friction can be suppressed since the sliding area is small, so that the working performance of the valve element is prevented from lowering.

Preferably, the valve element has a sealing portion that has an arc longitudinal sectional shape to come into contact with the valve seat, and an expanding diameter portion whose diameter gradually increases from the sealing portion.

According to the invention, the sealing portion can have stable seating performance onto the valve seat, and the expanding diameter portion can prevent working noise that is caused by fluid separation of the hydraulic fluid.

### BRIEF DESCRIPTION OF THE DRAWINGS

The present invention may be more readily described with reference to the accompanying drawings:
Fig. 1 is a longitudinal sectional view of the normally open solenoid valve according to an embodiment of the invention.
Fig. 2 is an enlarged longitudinal sectional view of the valve element.
Fig. 3 is a plan view of the valve element viewed from the second sliding portion side.
Fig. 4A is a side view and Fig. 4B is a cross sectional view, both showing the valve element of the conventional solenoid valve.

### DETAILED DESCRIPTION OF THE PREFERRED EMBODIMENTS

Hereinafter, an embodiment of the invention is described in detail with reference to the drawings.

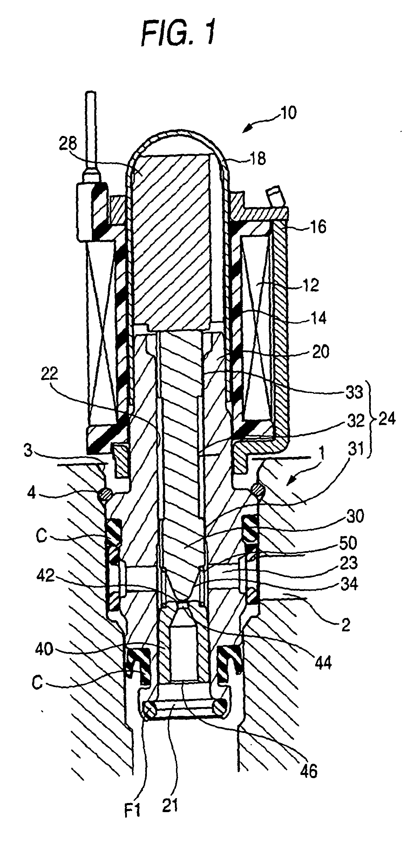

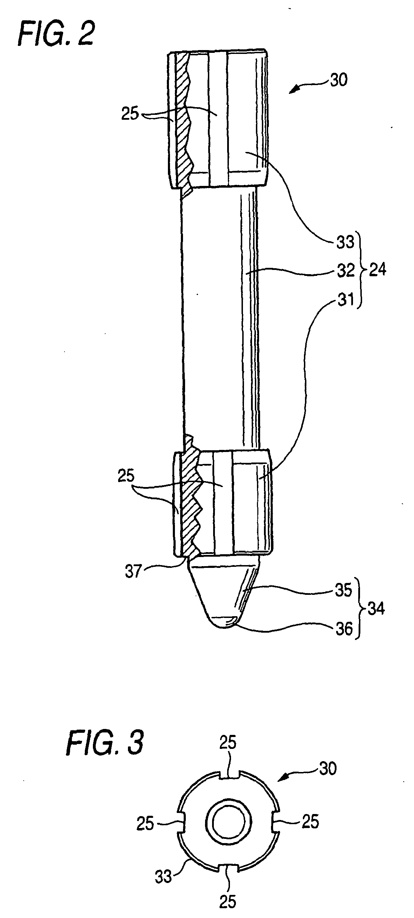

Fig. 1 is a longitudinal sectional view of a normally open solenoid valve relating to an embodiment of the invention. Fig. 2 is an enlarged longitudinal sectional view of a valve element, and Fig. 3 is a plan view of the same valve element.

The normally open solenoid valve 10 relating to an embodiment of the invention is, for example, the normally open solenoid valve 10 shown in Fig. 1 for opening and closing a hydraulic fluid channel of an antilock braking system (ABS) for a vehicle. The normally open solenoid valve 10 is partially inserted into a fitting hole 3 formed in a base material 1 made of, for example, aluminum, and fixed by an annular latching member 4. The normally open solenoid valve 10 has a fixed core 20 that is sealed on the base material 1 in a watertight manner by a plurality of annular sealing members C, a valve element 30 that is housed within the valve bore 22 opened through the fixed core 20 in its vertical axis direction, amovable core 28 that presses and moves the valve element 30, and a coil 12 for adsorbing the movable core 28 to the fixed core 20.

The fixed core 20 is a roughly cylindrical member formed of a magnetic material, for example, iron or an iron alloy, etc. The fixed core 20 has a flow inlet 21 and a flow outlet 23 which opens to the hydraulic fluid channel 2 formed in the base material 1, and the flow inlet 21 is attached with a first filter member F1. To the flow inlet 21 side of the opening end on one side of the valve bore 22 of the fixed core 20, a cylindrical valve seat element 40 is fitted and fixed. To the fixed core 20 projecting from the upper surface of the base material 1, a guide cylinder 18 with a bottomed cylindrical form is welded and fixed, and a coil 12 wound around a resin-made bobbin 14 and a coil case 16 covering the outside of the coil 12 are attached.

The valve element 30 is formed of a magnetic material, for example, stainless steel having a roughly columnar shaft part 24 and a roughly conic valve part 34, and is disposed within the valve bore 22 opened through the fixed core 20 in its axial direction in a manner enabling the valve element to freely advance and retreat. On the opposite end of the valve part 34 formed at the tip end of the valve element 30, the movable core 28 made of, for example, iron-based metal provided within the guide cylinder 18 is disposed in contact. A detailed structure of the valve element 30 is shown in Fig. 2. On the shaft part 24, a narrowed portion 32 is formed and a first sliding portion 31 and a second sliding portion 33 are formed on both sides of the narrowed portion 32. The outer diameters of the first sliding portion 31 and the second sliding portion are formed to be slightly smaller than the inner diameter of the valve bore 22 of the fixed core 20, and are machined with high accuracy to form a small clearance so as to accurately slide and guide the valve element 30 in the valve bore 22. The first sliding portion 31 is formed at a portion where the valve part 34 and the shaft part 24 are connected to each other in the vertical axial direction of the valve element 30, and the second sliding portion 33 is formed on the movable core 28 side at the other end of the shaft part 24. The sliding portions are thus formed near the both ends in the lengthwise direction of the valve element 30, so that the valve element 30 can be prevented from inclining in the valve bore 22, whereby reliable sealing performance onto the valve seat 42 can be maintained. Particularly, even while the clearance between the valve element 30 and the inner surface of the valve bore 22 is reduced, the sliding friction of the valve element can be reduced since the sliding area is reduced by the narrowed portion 32, and the narrowed portion 32 allows the hydraulic fluid to flow, whereby the valve element can smoothly move even when a high fluid pressure occurs in the hydraulic fluid. Furthermore, on the outer circumferential wall surfaces of the first sliding portion 31 and the second sliding portion 33, a plurality, for example, four of circulation grooves 25 concaved inward are extended and formed in the vertical direction of the valve element 30 as shown in Fig. 2 and Fig. 3, and these makes it possible for the hydraulic fluid to circulate.

The valve part 34 formed at the tip end of the valve element 30 comprises an expanding diameter portion 35 that is formed to be conic trapezoid and has an outer diameter thinner than the first sliding portion 31, and a roughly semispherical sealing portion 36 formed at the tip endof this expanding diameterportion. The end face 37 of the first sliding portion 31 stepped so as to reduce its diameter from the first sliding portion 31 toward the valve part 34 serves as a contact portion of the seat spring 50 that is a pressing member.

As shown in Fig. 1, the valve seat element 40 is a roughly cylindrical form, and has a first opening 44 with a small diameter and a second opening 4 6 with a large diameter. The second opening 46 opens to the flow inlet 21 of the fixed core 20, and the valve seat element 40 is fitted and fixed into the valve bore 22 of the fixed core 20. At the first opening 44 of the valve seat element 40, a valve seat 42 which the sealing portion 36 of the valve element 30 seats on is formed. The valve seat 42 is formed of a tapered surface whose diameter expands toward the outside of the valve seat element 40, and by contact with the sealing portion 36 having an arc longitudinal sectional shape formed at the tip end of the valve element 30, the first opening 44 is closed.

The sealing portion 36 of the valve element 30 is semispherical as shown in Fig. 2, and the seating diameter is formed by the portion in contact with the valve seat 42, so that the shape of the portion that comes into contact with the valve seat 42 is important. Therefore, the portion of the seal portion 36 to come into contact with the valve seat 42 is formed so as to be an arc in its longitudinal sectional shape, however, the tip end of the sealing portion 36 is not necessarily an arc in its longitudinal sectional shape. The expanding diameter portion 35 is formed by a single tapered surface so as to expand its diameter from the end portion of the sealing portion 36 that is an arc in its longitudinal sectional shape toward the end face 37 of the first sliding portion 31, however, it is also possible that the expanding diameter portion is formed of a tapered surface having a plurality of angles or a large arc as long as the hydraulic fluid flow becomes smooth. Such formation from the sealing portion 36 to the expanding diameter portion 35 can reduce the working noise that is caused by a phenomenon of fluid separation of the hydraulic fluid flowing-in from the first opening 44.

Describing the operation of the normally open solenoid valve 10 relating to this embodiment, in a condition where the coil 12 is not energized, the valve element 30 is pressed toward the movable core 28 side by the seat spring 50 and separated to dispose from the valve seat 42 as shown in Fig. 1. Therefore, in this normal condition, the hydraulic fluid passes through the first opening 44 from the flow inlet 21 and flows to the fluid outlet 23. When the coil 12 is energized and excited, a magnetic flux runs from the movable core 28 side to the fixed core 20 side, and the movable core 28 is attracted to the fixed core 20 side and presses the end portion of the retainer 24, and when this attractive force exceeds the fluid pressure of the hydraulic fluid to the seat spring 50, the valve element 30 seats on the valve seats 42 to close the fluid channel. At this point, the magnetic flux of the coil 12 also runs from the movable core 28 to the valve element 30, and the generatedmagnetic force influences from the fixed core 20 up to the valve element 30 formedof a magnetic material. However, a space created between the inner wall surface of the valve bore 22 and the narrowed portion 32 of the shaft part 24 makes it difficult for the magnetic flux to run and attenuates the magnetic force. Therefore, since the force for attracting the valve element 30 to the fixed core 20 is weakened, even when the valve element 30 is formed of a magnetic material having a high hardness, the sliding friction between the valve element 30 and the valve bore 22 is not increased so much.

The present invention is not limited to this embodiment, and can be variously modified within the scope of the invention as hereafter claimed.

For example, a seat spring 50 and a spring member 66 are used as a pressing member, however, the pressing member is not limited to these, and any member can be used as appropriate as long as the member is elastic.

Furthermore, in the above-described embodiment, the circulation grooves 25 formed in the first sliding portion 31 and the second sliding portion 33 are narrower in width than the sliding surfaces, however, to the contrary, it is also possible that the circulation grooves 25 may be formed to be wider.

## Claims

1. A normally open solenoid valve (10), comprising:
a coil (12),
a fixed core (20) that is excited when the coil is energized, the fixed core having a through hole (22) and an opening formed at an end of the through hole;
a valve seat (42) disposed at the opening;
a valve element (30) inserted through the through hole, the valve element including a valve part (34) for coming into contact with the valve seat and a roughly columnar shaft part (24) extending from the valve part; and
a movable core (28) that pushes and moves the valve element;
wherein the shaft part has
two sliding portions (31, 33), respectively formed near the end portions in the lengthwise direction of the valve element (30), that are slidable on the inner surface of the though hole and are formed to be spaced in an axial direction of the shaft part and
a narrowed portion (32) having an outer diameter smaller than the sliding portions and disposed between the two sliding portions,
**characterized in that** the sliding portions have circulation grooves (25), and the valve element (30) and the movable core (28) are separate parts such that the movable core (28) is attracted to the fixed core (20) and presses an end portion of the valve element (30).

2. The normally open solenoid valve according to claim 1, wherein the valve element includes a magnetic material.

3. The normally open solenoid valve according to claim 1 or 2,
wherein the two sliding portions are formed near a portion where the shaft part is connected to the valve part and near an end portion of the shaft part that comes into contact with the movable core; and
the two sliding portions are formed within a range slidable on the inner surface of the through hole.

4. The normally open solenoid valve according to claim 1, 2 or 3, wherein the valve element has a sealing portion (36) that has an arc longitudinal sectional shape to come into contact with the valve seat, and an expanding diameter portion (35) whose diameter gradually increases from the sealing portion.

## Patentansprüche

1. Normal offenes Magnetventil (10), umfassend:
eine Spule (12),
einen feststehenden Kern (20), der erregt wird, wenn die Spule mit Strom versorgt wird, wobei der feststehende Kern ein Durchloch (22) und eine an einem Ende des Durchlochs gebildete Öffnung aufweist;
einen an der Öffnung angeordneten Ventilsitz (42);
ein Ventilglied (30), das durch das Durchloch eingesetzt ist, wobei das Ventilglied einen Ventilteil (34) umfasst, um mit dem Ventilsitz in Kontakt zu kommen, und einen ungefähr säulenförmigen Schaftteil (24) umfasst, der sich aus dem Ventilteil erstreckt; und
einen beweglichen Kern (28), der das Ventilglied schiebt und bewegt;
wobei der Schaftteil zwei Gleitabschnitte (31, 33) aufweist, die jeweils in der Nähe der Endabschnitte in Längsrichtung des Ventilglieds (30) gebildet sind und die auf der Innenfläche des Durchlochs gleitbar sind und so ausgebildet sind, dass sie in einer axialen Richtung des Schaftteils beabstandet sind, und
einen verengten Abschnitt (32) aufweist, der einen Außendurchmesser besitzt, der kleiner als die Gleitabschnitte ist, und der zwischen den beiden Gleitabschnitten liegt,
**dadurch gekennzeichnet, dass** die Gleitabschnitte Zirkulationsrinnen (25) aufweisen und das Ventilglied (30) und der bewegliche Kern (28) getrennte Teile sind, so dass der bewegliche Kern (28) vom feststehenden Kern (20) angezogen wird und auf einen Endabschnitt des Ventilglieds (30) drückt.

2. Normal offenes Magnetventil nach Anspruch 1, wobei das Ventilglied ein magnetisches Material umfasst.

3. Normal offenes Magnetventil nach Anspruch 1 oder 2, wobei die zwei Gleitabschnitte in der Nähe eines Abschnitts, wo der Schaftteil mit dem Ventilteil verbunden ist, und in der Nähe eines Endabschnitts des Schaftteils, der mit dem beweglichen Kern in Kontakt kommt, gebildet sind; und
die zwei Gleitabschnitte in einem Gleitbereich auf der Innenfläche des Durchlochs gebildet sind.

4. Normal offenes Magnetventil nach Anspruch 1, 2 oder 3, wobei das Ventilglied einen Dichtungsabschnitt (36) aufweist, der einen bogenförmigen Längsschnitt besitzt, um mit dem Ventilsitz in Kontakt zu kommen, und einen Abschnitt (35) mit zunehmendem Durchmesser aufweist, dessen Durchmesser vom Dichtungsabschnitt aus zunimmt.

## Revendications

1. Electrovanne normalement ouverte (10), comprenant :
une bobine (12),
un noyau fixe (20) qui est excité quand la bobine est mise sous tension, le noyau fixe ayant un trou traversant (22) et une ouverture formés à une extrémité du trou traversant ;
un siège de vanne (42) disposé au niveau de l'ouverture ;
un élément de vanne (30) inséré dans le trou traversant, l'élément de vanne incluant une pièce de vanne (34) pour venir en contact avec le siège de vanne et une pièce d'arbre grossièrement colonnaire (24) s'étendant à partir de la pièce de vanne ; et
un noyau mobile (28) qui pousse et déplace l'élément de vanne ;
dans laquelle la partie d'arbre a
deux parties coulissantes (31, 33), respectivement formées près des parties d'extrémité dans la direction de la longueur de l'élément de vanne (30), qui sont coulissantes sur la surface interne du trou traversant et sont formées pour être espacées dans une direction axiale de la partie d'arbre, et
une partie étrécie (32) ayant un diamètre externe plus petit que les parties coulissantes et disposée entre les deux parties coulissantes,
**caractérisée en ce que** les parties coulissantes ont des gorges de circulation (25), et l'élément de vanne (30) et le noyau mobile (28) sont des pièces distinctes de sorte que le noyau mobile (28) est attiré vers le noyau fixe (20) et pousse une partie d'extrémité de l'élément de vanne (30).

2. Electrovanne normalement ouverte selon la revendication 1, dans laquelle l'élément de vanne inclut un matériau magnétique.

3. Electrovanne normalement ouverte selon la revendication 1 ou 2,
dans laquelle les deux parties coulissantes sont formées près d'une partie où la pièce d'arbre est connectée à la pièce de vanne et près d'une partie d'extrémité de la pièce d'arbre qui vient au contact du noyau mobile ; et
les deux parties coulissantes sont formées à une distance coulissant sur la surface interne du trou traversant.

4. Electrovanne normalement ouverte selon la revendication 1, 2 ou 3, dans laquelle l'élément de vanne a une partie d'étanchéité (36) qui a une forme d'arc de cercle en coupe longitudinale afin de venir au contact du siège de vanne, et une partie au diamètre croissant (35) dont le diamètre augmente progressivement en s'éloignant de la partie d'étanchéité.
